# EUROPÄISCHE PATENTSCHRIFT

(11) **EP 0 612 279 B1**
(45) Veröffentlichungstag und Bekanntmachung des Hinweises auf die Patenterteilung: **21.06.1995**
(21) Anmeldenummer: 92922290.9
(22) Anmeldetag: 09.11.1992
(51) Int. Cl.: B23B 29/04

(54) **SPANNVORRICHTUNG ZUR VERBINDUNG VON WERKZEUGKOPF UND WERKZEUGHALTER AN WERKZEUGMASCHINEN**
CLAMPING DEVICE FOR CONNECTING A TOOL HEAD TO A TOOL HOLDER ON MACHINE TOOLS
DISPOSITIF DE SERRAGE POUR ASSEMBLER UNE TETE D'OUTIL AVEC UN PORTE-OUTIL SUR DES MACHINES-OUTILS

(30) Priorität: 15.11.1991 DE 4137747
(43) Veröffentlichungstag der Anmeldung: 31.08.1994
(73) Patentinhaber: Krupp Widia GmbH, 45145 Essen (DE)
(72) Erfinder: VON HAAS, Rainer, D-2054 Geesthacht (DE); JESTER, Willi, D-4352 Herten (DE)
(74) Vertreter: Vomberg, Friedhelm, Dipl.-Phys.
(86) Internationale Anmeldenummer: DE9200931
(87) Internationale Veröffentlichungsnummer: WO9309902

(56) Entgegenhaltungen:
- DE-A- 3 709 299
- DE-A- 3 837 007
- US-A- 4 723 877

## Beschreibung

Die Erfindung betrifft eine Spannvorrichtung zur Verbindung eines Werkzeugkopfes mit einem Werkzeughalter an Werkzeugmaschinen, mit einem wechselbaren Werkzeugkopf, der mit einer zylindrischen oder zumindest teilweise kegeligen Aufnahmebohrung versehen ist, die mit einem entsprechenden Aufnahmezapfen zusammenwirkt, wobei der Werkzeughalter und der Werkzeugkopf über eine um ihre Längsachse drehbare Spannwelle spannbar sind.

Eine derartige Spannvorrichtung ist beispielsweise in der DE 38 37 007 C2 beschrieben. Die dortige Spannwelle betätigt Spannelemente, die beim Spannen von innen nach außen in Ausnehmungen des Werkzeugträgers bewegt werden, wodurch Werkzeugkopf und Werkzeugträger miteinander kraft- und formschlüssig verriegelbar sind. Um möglichst kurze Spannwege erzielen zu können, ist die Spannwelle mit spiralig verlaufenden Führungen für die Spannelemente ausgebildet, wobei die Steigung der Führungen in Richtung des zunehmenden Radius von der Drehachse der Spannwelle abnimmt und die Führungen über einen Drehwinkel von 20 bis 160° laufen. Bei einer entsprechenden Drehung der Spannwelle ist der Werkzeugkopf vollständig gespannt oder gelöst. Vorzugsweise laufen die Führungen über einen Drehwinkel von 90°. Als mögliche Verdrehsicherung werden beispielsweise O-Ringe für die Spannwelle angegeben, die jedoch vielfach nicht ausreichend sind.

Als selbsthemmende Spannsysteme sind nach dem Stand der Technik im übrigen Kniehebelspanner oder Exzenter- und Kurvenspanner bekannt. Ein Kniehebelspanner besteht aus zwei abgeknickten Spannhebeln und erreicht in der sogenannten Totpunktlage die größte Spannkraft. In dieser Stellung ist der Kniehebel selbsthemmend. Beim Exzenterspanner wird die Spannkraft über einen Exzenterbolzen erzeugt, wovon sich Kurvenspanner nur dadurch unterscheiden, daß sie eine in der Spannrichtung wirkende Spannkurve aufweisen. Den Kniehebel- und den Exzenter- oder Kurvenspannern ist gemeinsam, daß diese nur in einem kleinen Winkelbereich bzw. über einen kleinen Weg Spannkräfte aufbringen können. Soweit Exzenter- oder Kurvenspanner verwendet werden, ist jedoch auch hier die Gefahr des Lockerns des Spannzustandes gegeben, zumindest in einem Teilwinkelbereich.

Für große Winkelbereiche, über welche die Spannwelle oder ein entsprechendes Spannelement zum Spannen oder Lösen des Werkzeugkopfes bewegt werden muß, ist das Probelm der Selbsthemmung bisher noch nicht gelöst.

Es ist daher Aufgabe der vorliegenden Erfindung, die eingangs genannte Spannvorrichtung dahingehend zu verbessern, daß diese bei allen Spannwinkeln, insbesondere jedoch bei Spannwinkeln über 30° selbsthemmend den Spannzustand aufrechterhält. Die hierzu verwendeten Mittel sollen konstruktiv einfach, sowohl beim manuellen als auch beim automatischen Spannen einsetzbar und weitgehendst schmutzunempfindlich sein.

Diese Aufgabe wird durch die im Patentanspruch 1 beschriebene Vorrichtung gelöst. Die Neuerung dieser Spannvorrichtung besteht darin, daß die Spannwelle im gespannten Zustand über eine richtungsgeschaltete Kupplung als Rücklaufsperre in der zum Lösen notwendigen Drehrichtung gesperrt ist und daß die Kupplung zum Lösen des Werkzeugkopfes aus dem gespannten Zustand durch ein bewegbares Maschinenelement entriegelbar ist.

Unter richtungsgeschalteten Kupplungen, die auch als Freiläufe bezeichnet werden, sind alle Bauformen zu verstehen, die eine Relativdrehung in einer Richtung gestatten, während die andere Drehrichtung gesperrt ist. Im einfachsten Fall können solche Kupplungen Klinkenfreiläufe, wie Sperräder oder Ratschen sein, vorzugsweise handelt es sich jedoch um Klemmkörperfreiläufe.

Nach einer weiteren Ausgestaltung der Erfindung ist die Kupplung ein radialer Klemmkörperfreilauf, bei dem die Spannwelle als Treibkopf mit sich in einer Drehrichtung verjüngenden Einschnitten ausgebildet ist, wobei die Spannwelle radial außen von der Bohrung, in der sie gelagert ist, umschlossen ist und daß jeder der Einschnitte an seinem verjüngten Ende eine Durchbrechung aufweist, an der das Maschinenelement so ausrichtbar ist, daß der oder die Klemmkörper unter Aufhebung der Sperrwirkung in den breiteren Teil des Einschnittes getrieben werden. In dieser Stellung ist die Kraftübertragung zwischen der Spannwelle und der Umgebungsbohrung unterbrochen, d.h. ein Lösen der Spannwelle ist möglich. Andererseits ist das Lösen der Spannwelle auch auf den Zustand beschränkt, in dem die Sperrwirkung von außen durch das eingeführte Maschinenelement aufgehoben ist, d.h., ein unbeabsichtigtes Lösen des eingespannten Werkzeugkopfes während der Werkstückbearbeitung ist ausgeschlossen, da die Kupplung als Rücklaufsperre arbeitet. Diese konkrete Weiterbildung des Erfindungsgedankens hat den Vorteil einer einfachen Bauweise, die zudem noch schmutzunempfindlich ist.

Nach einer weiteren Ausgestaltung der Erfindung befinden sich an einem stirnseitigen Ende der Spannwelle eine oder mehrere sternförmige Ausnehmungen, die bis in den Bereich der Einschnitte reichen, wobei in diese Ausnehmungen ein Steckschlüssel einsteckbar oder lösbar eingesteckt ist. Vorzugsweise sind drei in gleichem Winkelabstand zueinander angeordnete Einschnitte und eine diese teilweise überlagernde Dreieck-Sternförmige Ausnehmung vorgesehen.

Zur besseren Zentrierung des Steckschlüssels kann vorzugsweise die Ausnehmung im Bereich der Längsachse der Spannwelle eine die sternförmigen Randbereiche überragende koaxiale Zentrierbohrung aufweisen, in die ein entsprechend ausgestalteter Zentrierstift einführbar oder lösbar eingeführt ist, der als Teil des Steckschlüssels den der Ausnehmung im übrigen entsprechenden sternförmigen Vorsprung überragt.

Der Steckschlüssel kann entweder gegen Federspannung axial verschiebbar gegenüber der Spannwelle angeordnet sein, d.h., die als Maschinenelement dienenden Vorsprünge greifen nur dann in den Bereich der Einschnitte, wenn der Steckschlüssel gegen Federkraft betätigt wird. Der Steckschlüssel ist mit Spiel für eine Drehung von vorzugsweise 5° bis 20° gegenüber der Spannwelle angeordnet. Dies bedeutet, daß zur Verschiebung der Klemmkörper zusätzlich eine Drehbewegung erforderlich ist, so daß ein unbeabsichtigtes Lösen der Sperrwirkung der Kupplung sicher vermieden wird.

Vorzugsweise werden als Klemmkörper Rollen oder Kugeln verwendet, wobei nach einer weiteren Ausgestaltung der Erfindung die Durchbrechung als Rollen- oder Kugelsitz ausgebildet ist.

Weitere Ausführungsformen der Erfindung werden im folgenden anhand der Zeichnungen erläutert. Es zeigen
- Fig. 1: einen Schnitt durch eine Spannvorrichtung mit Darstellung der Lage der radial angeordneten Spannwelle im Werkzeug,
- Fig. 2 und 3: jeweilige Teilquerschnittsansichten entlang der Linie II - II bzw. III - III nach Fig. 1,
- Fig. 4: eine Schnittansicht durch eine Spannvorrichtung mit einem Exzenterspannbolzen,
- Fig. 5: eine Teilansicht des freien Endes einer Spannwelle,
- Fig. 6: eine stirnseitige Ansicht der Ausführung nach Fig. 5,
- Fig. 7: die Seitenansicht eines Steckschlüssels,
- Fig. 8: eine stirnseitige Ansicht des Steckschlüssels nach Fig. 7 und
- Fig. 9: eine schematische Darstellung der Kupplung im gespannten Zustand,
- Fig. 10 und 11: jeweils verschiedene Ansichten einer alternativen Ausführungsform der Kupplung.

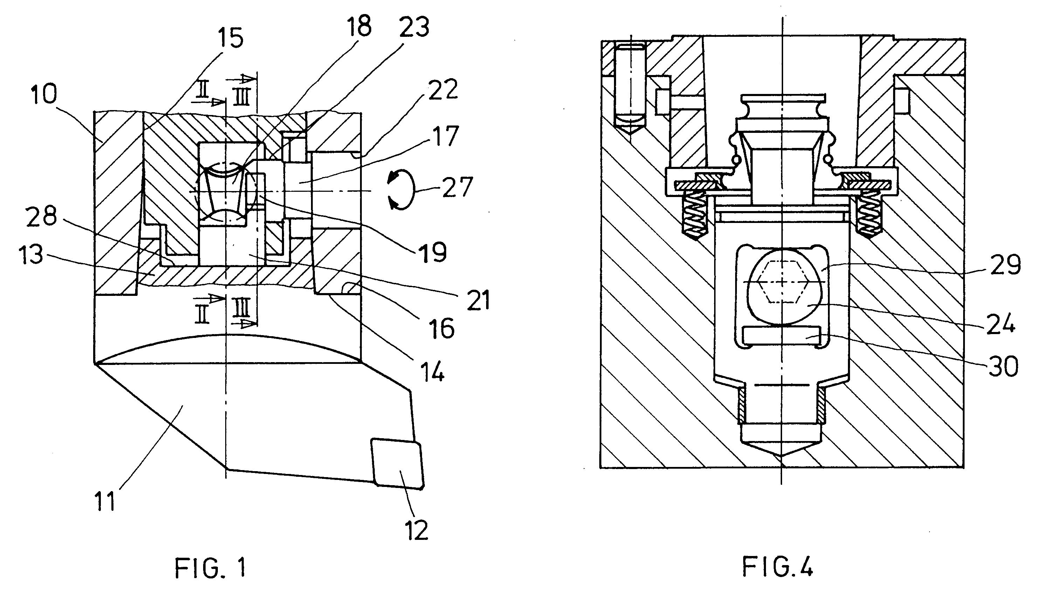

Die in Fig. 1 bis 4 dargestellten Ausführungsformen von Spannvorrichtungen gehören ausnahmslos zum Stand der Technik. Bei der Ausführungsform nach Fig. 1 bis 3 wird der Werkzeugkopf 11 einem Werkzeughalter 10 zugeführt, wozu er einen zylindrischen oder konischen Aufnahmezapfen 13 besitzt, der in eine entsprechend geformte Aufnahmebohrung 15 des Werkzeughalters 10 eingeführt werden kann. Hierbei kommen im gespannten Zustand der ringförmige Anlagebund 14 des Werkzeugkopfes 11 und die ringförmige Gegenfläche 16 des Werkzeughalters 10 zur Anlage. Der Werkzeugkopf 11 trägt im vorliegenden Fall eine Wendeschneidplatte 12 als Werkzeug.

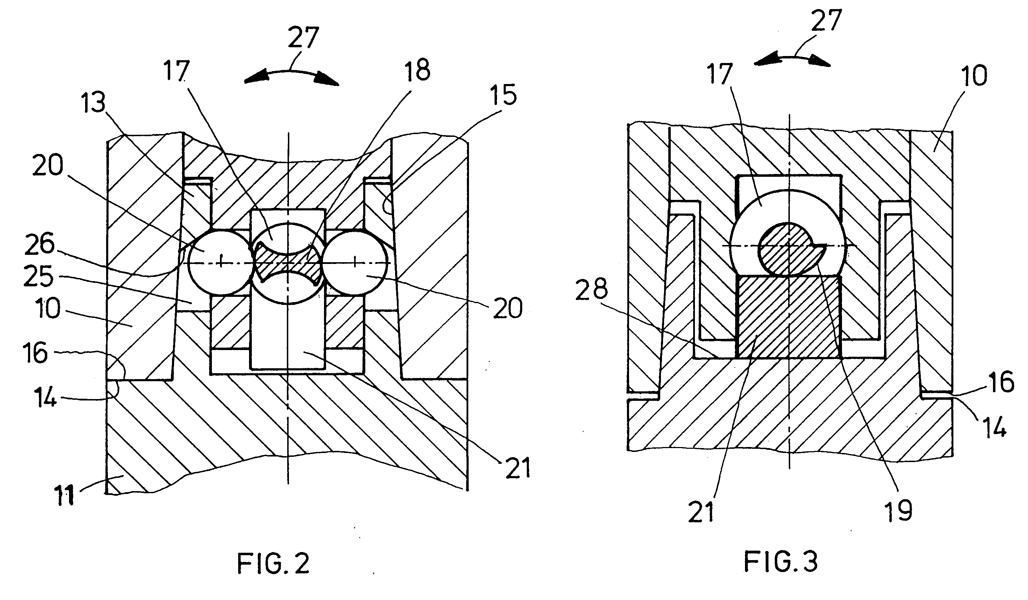

Als Spannvorrichtung dient eine in Richtung des Doppelpfeiles 27 hin und her bewegbare spannbare Spannwelle 17, deren Mantel eine spiralartige Spannbahn 18 und eine spiralartige Führung 19 für das Abdrückelement 21 aufweist. Die entsprechenden Führungen sind in Fig. 2 und 3 dargestellt, wobei es sich im Prinzip um Spiralen oder Kurven mathematisch zweiter oder höherer Ordnung handelt. Nach dem Spannprinzip wird durch die starke Steigung der Spannbahnen am Anfang der Spannweg der Spannelemente bei kurzer Spannbewegung relativ groß, während in einem nachfolgenden, wesentlich flacheren Teil der Spannbahn die erforderlichen hohen Spannkräfte aufgebracht werden. In entsprechender Umkehrung gilt dies für die mit dem Abdrückelement 21 in Wechselwirkung stehende Führungsspirale 19.

Wie aus Fig. 2 ersichtlich, wirkt die Spannwelle 17 auf Spannkugeln 20, die beim Spannen des Werkzeugkopfes 11 in eine entsprechend ausgebildete Bohrung 25 im Aufnahmezapfen 13 gedrückt werden. Diese Bohrung 25 besitzt wenigstens eine abgeschrägte Seitenfläche 26, um die Spannbewegung möglichst reibungsarm durchführen zu können. Die Spannwelle 17 selbst ist in einer radialen Bohrung 22 des Werkzeughalters 10 einerseits und einer weiteren radialen Bohrung 23 gelagert. Das Spannen bzw. Abdrücken kann durch Verdrehung der Spannwelle um etwa 90° bewirkt werden.

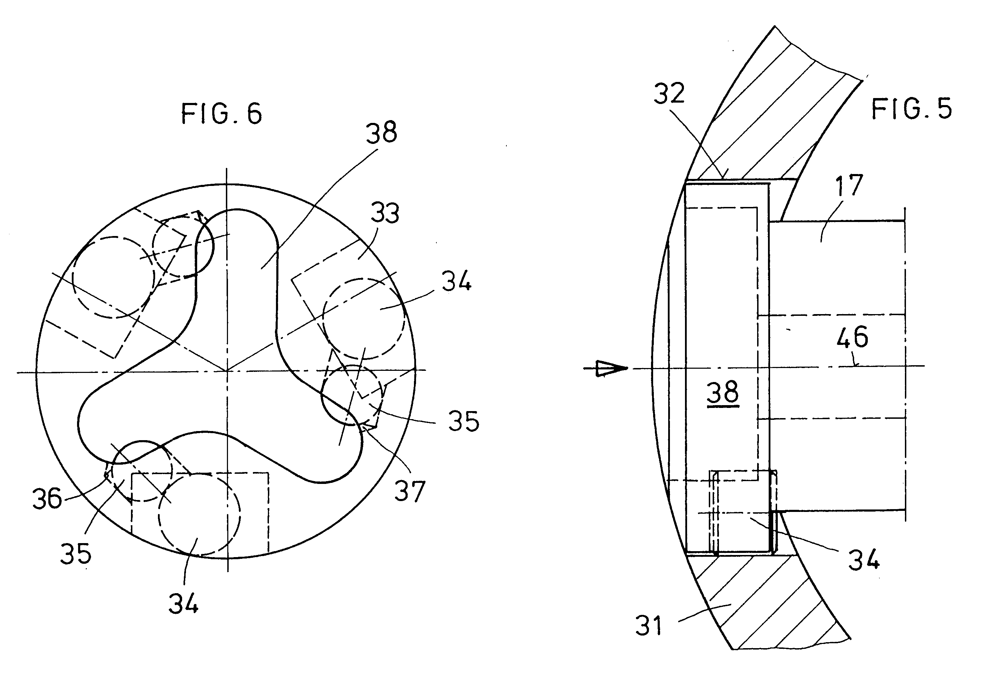

Wie in Fig. 4 angedeutet, kann jedoch auch die Spannwelle im Querschnitt ein Polygonprofil 24 aufweisen, wobei die Spannwelle eine transversale Durchbrechung 29 des Spannzapfens mit einer entsprechend ausgebildeten Spannfläche 30 durchragt. Durch Drehung der Spannwelle mit dem Polygonprofil 24 im Bereich der Durchbrechung 29 kann der in Fig. 4 gespannte Zustand erreicht werden.

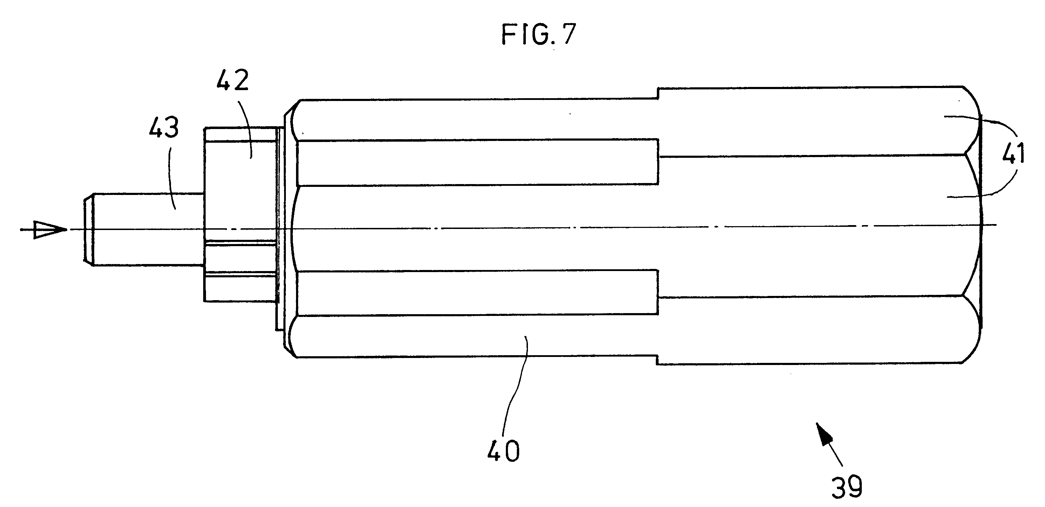

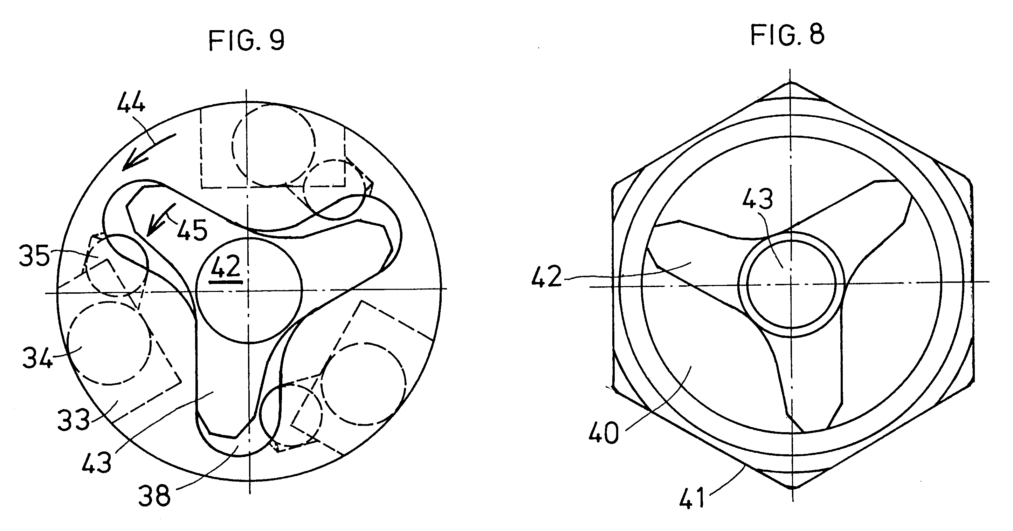

Die erfindungsgemäße als lösbare Rücklaufsperre dienende Spannvorrichtung ist in den Fig. 5 bis 9 dargestellt. Die Ausbildung der Spannwelle 17 kann entsprechend der Fig. 1 bis 4 sein, wobei die Spannwelle jedoch im hinteren in Fig. 5 dargestellten Teil im wesentlichen zylindrisch ausgebildet sein soll. Die in einer entsprechenden Aufnahme 31 des Werkzeughalters 10 gelagerte Spannwelle 17 besitzt einen ringförmigen Anlagebund 32, der drei Einschnitte 33 aufweist, in denen Rollen 34 gelagert sind. Die Einschnitte 33 sind derart in der Spannwelle 17 ein-Spannwelle 17 eingebettet, daß sie aus einem verjüngenden Teil bestehen, an dem sich eine Durchbrechung 36 befindet und einem breiteren Ende, in dem die größere Rolle 34 klemmungsfrei ohne Überstand liegen kann. Die Durchbrechung 36 ist gleichzeitig als Führung 37 für die kleinere Kugel 35 ausgebildet. Die Durchbrechung 36 steht in Verbindung mit einer dreieckigsternförmigen axialen Ausnehmung 38, und zwar derart, daß durch Einschieben und Drehen des in Fig. 7 dargestellten Maschinenelementes (Spannschlüssel 39) die Kugeln 35 aus ihrer Lage 37 gedrückt werden, wobei sie die benachbarten Rollen 34 in den größeren Teil der Einschnitte 33 bewegen, so daß die Sperrstellung aufgehoben wird. Der Spannschlüssel 39 besteht aus einem hinteren Schaftteil 40, das ggf. in Form eines Sechskantprofils 41 enden kann. Aus dem Schaftteil 40 ragt stirnseitig ein sternförmiger Vorsprung 42 hervor, dessen drei aus Fig. 8 ersichtlichen Arme jeweils zueinander einen Winkel von 120° bilden. Zentral wird der Vorsprung noch durch einen Zentrierzapfen 43 überragt, dem ggf. eine entsprechende Aufnahmebohrung der Spannwelle angepaßt ist.

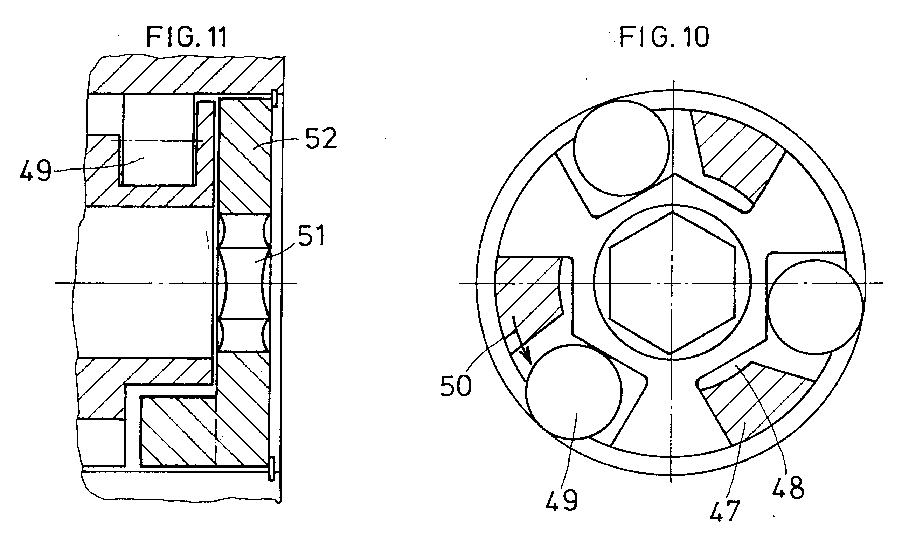

Eine Ausführungsvariante ist Fig. 10 und 11 zu entnehmen. Bei dieser Ausführungsform werden jeweils auf einem Ringkörper 52 in Dreieckform angeordnete Backen 47 verwendet, die in entsprechende Ausnehmungen 48 eingreifen. Die Rollen 49 liegen in jeweils einem davon abgetrennten Teil und können durch Drehung der Backen 47 in der durch den Pfeil 50 kenntlich gemachten Richtung festgesetzt werden. Die Drehung des Ringes kann über einen Innensechskanteingriff 51, der axial zugänglich ist, durchgeführt werden. Im übrigen gilt konstruktiv zu der Spannwelle das oben Ausgeführte.

Der Spannvorgang bei einer Spannvorrichtung gemäß Fig. 1 bis 3 läuft wie bisher durch Drehen der Spannwelle ab, wozu im einzelnen auf die DE 38 37 007 C2 verwiesen wird. Die Spannwelle nach Fig. 4 ist ebenfalls von dem ungespannten Zustand in den wegen. Bei den jeweiligen Spannbewegungen - meist Rechtsdrehungen - wird die Freilaufeigenschaft der richtungsgeschalteten Kupplung ausgenutzt, d.h., die Kupplung nach Fig. 5 bis 9 befindet sich im gespannten Zustand entsprechend der Darstellung nach Fig. 9. Bei Drehung in Richtung des Pfeiles 44 wird jede der Rollen 34 in ihren Sitz zwischen 32 und 33 gepreßt, wobei die Kugeln 35 jeweils frei in den Führungen liegen. Die Kupplung befindet sich (siehe Fig. 9) im Sperrzustand. Wird nun das Maschinenbauelement - der Steckschlüssel 39 - mit seinen Vorsprüngen 42 und 43 in die Ausnehmung 38 eingeführt und in Richtung des Pfeiles 45 gedreht und wird hierbei das jeweils zwischen dem sternförmigen Vorsprung 42 und der Kugeln 35 bestehende Spiel aufgehoben, so werden die Kugeln 35 jeweils aus ihrer Lage 37 geschoben, was ebenfalls zu einer Verschiebung der Rollen 34 in den erweiterten Teil der Einschnitte 33 führt. Durch diese Drehung des Steckschlüssels 39 wird somit die Sperrwirkung der Kupplung aufgehoben, so daß auch die Spannwelle durch Drehen gelöst werden kann.

## Patentansprüche

1. Spannvorrichtung zur Verbindung eines Werkzeugkopfes (11) mit einem Werkzeughalter (10) an Werkzeugmaschinen, mit einem wechselbaren Werkzeugkopf (11), der mit einer zylindrischen oder zumindest teilweise kegeligen Aufnahmebohrung (15) versehen ist, die mit einem entsprechenden Aufnahmezapfen (13) zusammenwirkt, wobei der Werkzeughalter (10) und der Werkzeugkopf (11) über eine um ihre Längsachse (46) drehbare Spannwelle (17) spannbar sind, **dadurch gekennzeichnet**,
daß die Spannwelle (17) im gespannten Zustand über eine richtungsgeschaltete Kupplung (31 bis 38) als Rücklaufsperre in der zum Lösen notwendigen Drehrichtung gesperrt ist und daß die Kupplung (31 bis 38) zum Lösen des Werkzeugkopfes (11) aus dem gespannten Zustand durch ein bewegbares Maschinenelement (39) entriegelbar ist.

2. Spannvorrichtung nach Anspruch 1, dadurch gekennzeichnet, daß die Kupplung ein radialer Klemmkörperfreilauf (31 bis 38) ist, bei dem die Spannwelle (17) als Treibkopf mit sich in einer Drehrichtung verjüngenden Einschnitten (33) ausgebildet ist, wobei die Spannwelle (17) radial außen von der Bohrung (32), in der sie gelagert ist, umschlossen ist und daß jeder der Einschnitte (33) an seinem verjüngten Ende eine Durchbrechung (36) aufweist, an der das Maschinenelement (39) so ausrichtbar ist, daß der oder die Klemmkörper (34) unter Aufhebung der Sperrwirkung in den breiteren Teil des Einschnittes (33) getrieben werden.

3. Spannvorrichtung nach Anspruch 2, dadurch gekennzeichnet, daß an einem stirnseitigen Ende der Spannwelle (17) eine oder mehrere sternförmige Ausnehmungen (38) angeordnet sind, die bis in den Bereich der Einschnitte (33) reichen, und daß in diese Ausnehmungen (38) ein Spannschlüssel (39) einsteckbar oder lösbar eingesteckt ist.

4. Spannvorrichtung nach Anspruch 3, dadurch gekennzeichnet, daß 3 in gleichem Winkelabstand zueinander angeordnete Einschnitte (33) und eine diese teilweise überlagernde dreieck-sternförmige Ausnehmung (38) vorgesehen sind.

5. Spannvorrichtung nach Anspruch 3 oder 4, dadurch gekennzeichnet, daß die Ausnehmung (38) im Bereich der Längsachse (46) der Spannwelle (17) eine die sternförmigen Randbereiche (38) überragende koaxiale Zentrierbohrung aufweist, in die ein Zentrierstift (43) einführbar oder lösbar eingeführt ist, der als Teil des Steckschlüssels (39) den der Ausnehmung im übrigen entsprechenden sternförmigen Vorsprung (42) überragt.

6. Spannvorrichtung nach einem der Ansprüche 3 bis 5, dadurch gekennzeichnet, daß der Steckschlüssel (39) gegen Federspannung axial verschiebbar gegenüber der Spannwelle (17) und unter einem eine Drehung gegenüber der Spannwelle (17) ermöglichenden Spiel angeordnet ist.

7. Spannvorrichtung nach Anspruch 6, dadurch gekennzeichnet, daß der Steckschlüssel (39) gegenüber der Spannwelle um 5° bis 20° drehbar ist.

8. Spannvorrichtung nach einem der Ansprüche 3 bis 7, dadurch gekennzeichnet, daß die Klemmkörper Rollen oder Kugeln (34) sind.

9. Spannvorrichtung nach Anspruch 8, dadurch gekennzeichnet, daß die Durchbrechung (36) als Rollen- oder Kugelsitz (37) ausgebildet ist.

## Claims

1. Clamping device for connecting a tool head (11) with a tool holder (10) on machine tools, with a changeable tool head (11) which is provided with a cylindrical or at least partly conical receiving bore (15) which fits with a complementary matching pin (13), whereby the tool holder (10) and the tool head (11) can be clamped together by a clamping shaft (17) rotatable about its longitudinal axis (46),
characterized in that
the clamping shaft (17) is locked in the clamped position by switchable unidirectional clutch (31 to 38) as a pawl stop which is locked against rotating in the loosening direction and that the clutch (31 to 38) can be unlocked to release the tool head (11) from the locked condition by a movable machine element (39).

2. Clamping device according to claim 1, characterized in that the clutch is a radial clamping-body overrunning clutch (31 to 38) where the clamping shaft (17) is constituted as a drive head with recesses (33) tapering in the rotation direction, the clamping shaft (17) being surrounded radially outside the bore (32) in which it is running, each of the recesses (33) having at its shallow end an opening (36) with respect to which the machine element (39) can be positioned so that the clamping-body or bodies (34) can be pushed into the broader part(s) of the recess (33) thereby releasing the locking effect.

3. Clamping device according to claim 2, characterized in that an end of the clamping shaft (17) has one or more star-shaped openings (38) which extend to the region of the recesses (33) and that a clamping key (39) is insertable or releasably inserted into these openings (38).

4. Clamping device according to claim 3, characterized in that three angularly equispaced recesses (33) and a triangle-starshaped opening (38) partially overlying it are provided.

5. Clamping device according to claim 3 or 4, characterized in that the opening (38) has in the region of the longitudinal axis (46) or the clamping shaft (17) a coaxial centering bore overlapping the triangle-starshaped edge regions (38) and in which is iserted or releasably engaged a centering pin (43) which projects as a part of the insert key (39) the star-shaped projection (42), in the rest corresponding with the opening.

6. Clamping device according to one of claims 3 to 5, characterized in that the insert key (39) arranged is axially displaceable in relation to the clamping shaft (17) against resilience and is arranged with rotary play with respect to the clamping shaft (17).

7. Clamping device according to claim 6, characterized in that the insert key (39) can rotate relative to the clamping shaft trough 5° to 20°.

8. Clamping device according to one of claims 3 to 7, characterized in that the clamping bodies are rollers or balls (34).

9. Clamping device according to claim 8, characterized in that the opening (36) is formed as a roller or ball seat (37)

## Revendications

1. Dispositif de serrage pour assembler une tête d'outil (11) avec un porte-outil (10) sur des machines-outils, comportant une tête d'outil (11) échangeable qui est pourvue d'un perçage de logement (15) cylindrique ou du moins en partie conique, qui communique avec un tenon de logement (13) correspondant, le porte-outil (10) ainsi que la tête d'outil (11) pouvant être conjugués par le biais d'un arbre de serrage (17) tournant autour de son axe longitudinal (46),
**caractérisé par le fait**
que l'arbre de serrage (17) est bloqué dans la position serrée par le biais d'un accouplement à changement de vitesse directionnel (31 à 38) qui fait fonction d'enclenchement au retour dans le sens de rotation nécessaire pour le desserrage et que l'accouplement (31 à 38) peut être débloqué par l'intermédiaire d'un élément de machine mobile (39) pour desserrer la tête d'outil (11) de la position serrée.

2. Dispositif de serrage selon la revendication 1, caractérisé par le fait que l'accouplement est une roue libre radiale à corps de serrage (31 à 38) dans le cas de laquelle l'arbre de serrage (17) est construit en tant que tête moteur présentant des encoches (33) réduites dans un sens de rotation, l'arbre de serrage (17) étant entouré à l'extérieur de façon radiale du perçage (32) dans lequel il est logé et que l'extrémité réduite de chacune des encoches (33) présente une ouverture (36) où l'élément de machine (39) peut être orienté de telle sorte que le corps de serrage ou bien les corps de serrage (34), supprimant l'effet de blocage, soient poussés dans la partie plus large de l'encoche (33).

3. Dispositif de serrage selon la revendication 2, caractérisé par le fait que l'arbre de serrage (17) présente à une extrémité frontale un ou plusieurs creux en forme d'étoile (38) qui s'étendent jusqu'au domaine où sont disposées les encoches (33), et qu'une clé de serrage (39) peut être introduite ou est introduite de manière amovible dans ces creux (38).

4. Dispositif de serrage selon la revendication 3, caractérisé par le fait que l'on prévoit trois encoches (33) disposées de telle sorte qu'elles présentent une même distance angulaire entre elles ainsi qu'un creux (38) à trois lobes superposant en partie ces premières.

5. Dispositif de serrage selon la revendication 3 ou 4, caractérisé par le fait que le creux (38) présente dans le domaine de l'axe longitudinal (46) de l'arbre de serrage (17) un forage de centrage coaxial dépassant les régions marginales (38) en forme d'étoile, dans lequel peut être introduite ou est introduite de manière amovible une goupille de centrage (43) qui dépasse en tant que partie constituante de la clé à introduire (39) la partie en saillie en forme d'étoile (42) correspondant du reste au creux.

6. Dispositif de serrage selon l'une des revendications 3 à 5, caractérisé par le fait que la clé à introduire (39) est disposée de telle sorte qu'elle puisse être déplacée axialement par rapport à l'arbre de serrage (17) contre la tension du ressort et avec un jeu permettant une rotation par rapport à l'arbre de serrage (17).

7. Dispositif de serrage selon la revendication 6, caractérisé par le fait que la clé à introduire (39) peut exercer une rotation de 5 ° à 20° par rapport à l'arbre de serrage.

8. Dispositif de serrage selon l'une des revendications 3 à 7, caractérisé par le fait que les corps de serrage sont des rouleaux ou des billes (34).

9. Dispositif de serrage selon la revendication 8, caractérisé par le fait que l'ouverture (36) est formée en tant que logement de rouleaux ou de billes (37).
